# EUROPEAN PATENT APPLICATION

(11) **EP 0 679 467 A2**
(43) Date of publication of application: **02.11.1995**
(21) Application number: 95302779.4
(22) Date of filing: 25.04.1995
(51) Int. Cl.: B23H 1/02, B23H 7/04

(54) **Electric discharge method and its apparatus**

(30) Priority: 25.04.1994 JP 107455/94
(71) Applicant: FANUC LTD., Minamitsuru-gun, Yamanashi 401-05 (JP)
(72) Inventor: Murai, Masao, Room 10-103, FANUC Manshonharimomi, Minamitsuru-gun, Yamanashi, 401-05 (JP); Kawahara, Akiyoshi, Room 6-110, FANUC, Minamitsuru-gun, Yamanashi, 401-05 (JP); Sakurai, Akihiro, FANUC Dai3virakaramatsu, Minamitsuru-gun, Yamanashi, 401-05 (JP)
(74) Representative: Billington, Lawrence Emlyn

(57) **Abstract**

An electric discharge machining method for machining a workpiece (2) by producing a series of intermittent electric discharges at a gap between a tool electrode (1) and the workpiece (2). A discharge inducting circuit (4) has at least one DC power source (41) for inducting an electric discharge at the gap between the electrodes, a main discharge circuit (3) is for superimposing the main discharge current for machining after the electric discharge, and a switching circuit (6) is for selectively changing the polarity of the discharge inducting voltage of the discharge inducting circuit (4) at the gap. The polarity of the electric discharge voltage applied to the gap can be changed at each electric discharge as a minimum unit period. Therefore, electrolytic effects caused by the application of the discharge inducting voltage can be avoided.

## Description

The present invention relates to an electric discharge method and its apparatus,and more particularly to an electric discharge method of producing a series of intermittent electric discharges between a tool electrode and a workpiece electrode for machining the workpiece, and an apparatus for implementing the method.

It is known that electrolytic effect is one of the causes for declining machining accuracy in electric discharge machining. Usually, electric discharge machining involves electric discharges through a processing fluid including electrolyte, e.g. water, filled in a processing gap between the tool electrode and the workpiece electrode. Also, in this electric discharge machining, while discharge inducting voltage is employed, the higher a discharge inducting voltage is applied across the processing gap, the more an electrolytic current for sparking is allowed to cross the processing gap. Unfortunately, the electrolytic current causes surface regions of the workpiece to be ionized thus to be eroded, so that a finishing quality of the workpiece declines. The amount of the erosion is a few micrometers to some tens micrometers in depth and will never be negligible when a few thousandths of a millimeter of machining accuracy is required. Also, if the workpiece is an alloy composed of different materials, the speed of erosion varies depending on the materials and a difference of erosion speed may result in removal of a particular metal material.

For overcoming the above drawback or preventing the workpiece surface from being impaired in quality by the electrolytic effect, various techniques have been developed. Such methods are as follows:
1. A first method is to employ bipolar pulse voltages so that a mean voltage between electrodes may become 0 V.
2. A second method is, as disclosed in Japanese Non-examined Patent Publication No. 60-146624, to employ a discharge inducting voltage of opposite polarity to the polarity of a main discharge power source.
3. A third method is, as disclosed in Japanese Non-examined Publication No. 56-82127, to apply an AC voltage of high frequency for inducting an electric discharge.

However, the above-mentioned methods designed for preventing the workpiece surface from being impaired have their respective disadvantages.
1. The disadvantage of the first method of employing bipolar pulse voltages is that a cycle time of discharge action is increased so that the machining speed decreases.
2. The disadvantage of the second method of employing the discharge inducting voltage of opposite polarity to that of the main discharge power source is that it is difficult to make the mean voltage between electrodes 0 V. It may be thought that the disadvantage becomes from following reason. During feeding a main discharge current, a discharge continues between electrodes and the potential voltage across the gap is lower than the discharge inducting voltage. Also, the supply of the discharge inducting voltage is longer in a period than the feeding of the main discharge current where the frequency of discharge is low. Therefore, it is difficult to make 0 V of the average voltage across the electrodes from a product of the applying voltage and its applying duration.
3. The disadvantage of the third method of employing the high frequency AC voltage is that a high frequency oscillator is additionally needed which makes the overall circuitry arrangement intricate and thus increases its cost. For applying a stable voltage across the electrodes, an L-C resonance circuit which is synchronous with the frequency of the discharge inducting source is also needed. This may cause a change of inductance across the electrodes to vary a discharge inducting voltage at the gap.

An electric discharge method according to the present invention is defined in claim 1 and is one in which a discharge inducting voltage is first applied across a gap between a tool electrode and a workpiece and then, a main discharge current is superimposed immediately after a dielectric breakdown occurs at the gap between the electrodes by a discharge inducted by the discharge inducting voltage, and which comprises shifting polarity of the discharge inducting voltage at the gap from one to the other in each cycle of the electric discharge as a minimum unit period. Accordingly, a deterioration of the workpiece surface caused by electrolytic reaction may be prevented or at least reduced, in a manner not having disadvantages of the prior methods.

The shift (ie reversal) of the polarity of the discharge inducting voltage in the method of the present invention may be carried out periodically. More particularly, the periodical shift of the polarity may be carried out at each cycle of the electric discharge or at a predetermined period of time in which a series of electric discharges generate. In the case of generating the shift of its polarity at the predetermined period of time, the two polarities of the discharge inducting voltage may be equal in number of applications for each period, and a sequence of its polarities may be set arbitrarily or in a prescribed order.

An electric discharge apparatus according to the present invention for machining a workpiece by producing a series of intermittent electric discharges across a gap between a tool electrode and a workpiece may have a discharge inducting circuit having at least one DC power source for generating an electric discharge at the gap between the electrodes, a main discharge circuit for superimposing a main discharge current for machining to the electrodes after the electric discharge, and a switching circuit for selectively changing the polarity of a discharge inducting voltage of the discharge inducting circuit. In action, a deterioration of the workpiece surface caused by electrolytic reaction may be reliably prevented or at least reduced.

In the electric discharge apparatus according to the present invention, the switching circuit may include switch means connected between the DC source and the gap between electrodes comprising a discharge inducting circuit. The switching circuit may be arranged to change the polarity of the discharge inducting voltage applied at the gap between electrodes by closing or opening or may be arranged to change the polarity periodically in each cycle of the discharging action, which is designated as a minimum unit of function period.

A first embodiment of the electric discharge apparatus according to the present invention has two connecting circuits arranged for selectively transmitting one of two polarities from one DC source to the electrodes. More specifically, the polarity of discharge inducting voltage can be changed according to a selection from the two connecting circuits by the switching circuit.

A second embodiment of the electric discharge apparatus according to the present invention includes two DC sources, a connecting direction to the gap between electrodes is opposite to each other. By selecting one of the two DC sources, the polarity of the discharge inducting voltage to the gap between electrodes is changed.

A third embodiment of the electric discharge apparatus according to the present invention has the switching circuit change a polarity according to an output signal of a flip-flop responsive to the control signal timed for discharging.

A fourth embodiment according to the electric discharge apparatus of the present invention has a period of polarity changing by the switching circuit count according to a counter which receives a control signal timed for discharging.

In the electric discharge method according to the present invention, the discharge inducting voltage is applied to the gap between the tool electrode and the workpiece for breaking down an insulation of the gap between electrodes thereby inducting a discharge. The polarity of the discharge inducting voltage may be positive when it is identical to the polarity of the main discharge source which supplies the main discharge current to the workpiece and negative when it is opposite to the same.

In the electric discharge method according to the present invention, the polarity of the discharge inducting voltage is not shifted while being applied, but in each cycle of the discharging action as a minimum unit period.

According to one form of electric discharge method of the present invention, the following operation offers advantages. The discharge inducting voltage of one polarity from the discharge inducting circuit is first applied to the gap between the tool electrode and the workpiece. After a while, a dielectric breakdown occurs at the gap under the discharge inducting voltage and an electric discharge starts to occur. Then, from this time of electric discharge start the main discharge current is supplied from the main discharge source to the gap between electrodes for continuous discharge. During the electric discharge, the voltage of the gap between electrodes is sufficiently smaller than the discharge inducting voltage. The electric discharge is used for electric discharge machining the workpiece. After a prescribed period, the main discharge current is disconnected. After the main discharge current is disconnected, the electric discharge continues for a short while. After the electric discharge being ceased, a rest time is given for restoring the insulation at the gap between the electrodes and after that one cycle of the electric discharge is terminated.

After completion of one cycle of the electric discharge which is a minimum unit period, a succeeding cycle of the electric discharge is started with the opposite polarity of the discharge inducting voltage which is applied to the gap from the discharge inducting circuits to the polarity in the previous cycle. The discharge inducting voltage is different in the polarity but identical in the operation. Therefore, a dielectric breakdown occurs at the gap between the electrodes after a predetermined period and an electric discharge starts. And a following discharge machining is performed in a similar way.

The polarity of the discharge inducting voltage to the gap between electrodes is only different between the two cycles of the electric discharge. A duration from the application of the discharge inducting voltage to the start of the electric discharge may be varied depending on the conditions of the gap between the electrodes. It may be different in time to apply the discharge inducting voltage in each electric discharge. However, the absolute value of the discharge inducting voltage is equal and a difference between the apply durations may be negligible in average. It is thus understood that the average voltage of the gap between the electrodes is 0 V. This will prevent a deterioration of the surface quality of the workpiece which results from the electrolytic reaction triggered by the application of the discharge inducting voltage.

The shift of the polarity of the discharge inducting voltage in this electric discharge machining can be carried out periodically at an interval of the electric discharge as a minimum unit period. More particularly, when the periodical period is set to the minimum unit period, the shift of the polarity of the discharge inducting voltage is executed in each cycle of the electric discharge considered as a minimum unit. The shift of the polarity may also be carried out at an interval of a given period which includes several electric discharges. In the shift of the polarity during the given period, the rate of polarity of electric discharge voltage can be a given rate. The sequence of shift of the polarity during the predetermined period may be an arbitrary order or a predetermined order.

The shift of the polarity of the discharge inducting voltage of the present invention may be implemented by a switching circuit controlled by a control circuit which outputs a control signal based on a generation of an electric discharge. The switching circuit controls a make and break of a switching means installed between the discharge inducting source and the gap between electroads so that it changes a connection of the discharge inducting source or selects discharge inducting sources, polarities of which are different. The polarity of the electric discharge voltage applied to the gap between electrodes is shifted by the control of the discharge inducting voltage, so that the mean voltage of the discharge inducting voltage at the gap induces nearly 0 V and an effect by an electrolytic reaction caused by applying of the electric discharge voltage is essentially ceased, and a deterioration of the workpiece surface will be prevented or reduced.

As set forth above, the electric discharge method and its apparatus according to the present invention are effective to protect the surface of a workpiece from being impaired by the electrolytic reaction.

For ease of understanding the prescribed features of the present invention, preferred embodiments will be described without any limitation referring to the accompanying drawings.
Fig. 1 is a schematic diagram of a power supply section of an electric discharge apparatus showing Embodiment 1 of the present invention;
Fig. 2 is a time chart of an electric discharge machining of Embodiment 1 of the present invention;
Fig. 3 is a diagram showing a circuitry connection in the power supply section of Embodiment 1;
Fig. 4 is a diagram showing a circuitry connection in the power supply section of Embodiment 1;
Fig. 5 is a diagram showing a circuitry connection in the power supply section of Embodiment 1;
Fig. 6 is a schematic diagram of a power supply section of an electric discharge apparatus showing Embodiment 2 of the present invention;
Fig. 7 is a time chart of electric discharge actions of Embodiment 2 of the present invention; and
Fig. 8 is a schematic diagram of a power supply section of an electric discharge apparatus showing Embodiment 3 of the present invention.

The electric discharge apparatus for carrying out the electric discharge machining of the present invention is substantially similar to a conventional electric discharge apparatus and is characterized in the method and in the apparatus of applying a voltage between a tool electrode and a workpiece. Hence, a construction of the apparatus for applying the voltage between the two electrodes will be explained while the description of any conventional electric discharge apparatus is omitted.

### [Embodiment 1 of the present invention]

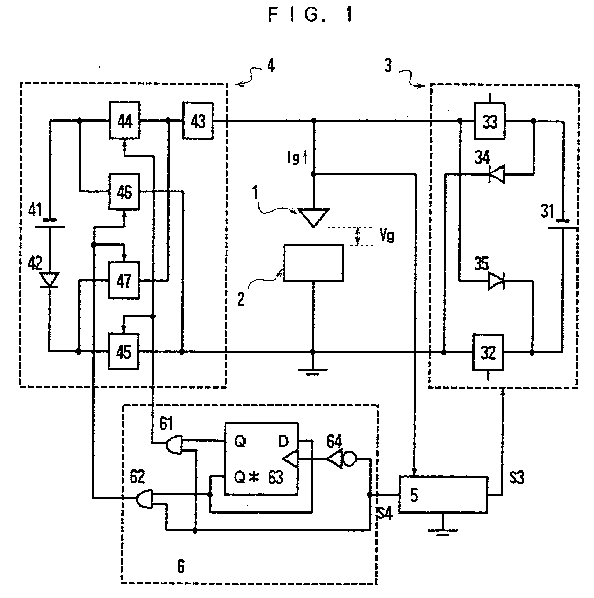

The construction and operation of embodiment 1 of the present invention will first be explained referring to Figs. 1 to 5.

### (Construction of Embodiment 1)

Fig. 1 is a schematic view showing a power supply section of the electric discharge apparatus of Embodiment 1 of the present invention. In Fig. 1, a tool electrode 1 is spaced by a small distance from a workpiece 2. The small distance is used as a gap between two electrodes for an electric discharge. More specifically, the workpiece 2 is grounded and a series of intermittent electric discharges are produced at the gap between the tool electrode 1 and the workpiece 2 through a processing fluid including electrolyte so that electric discharge machining is introduced.

The power supply in the electric discharge apparatus of the present embodiment comprises a main discharge circuit 3 and a discharge inducting circuit 4. The discharge inducting circuit 4 is a circuit that inducts an electric discharge st a gap between the electrodes. The main discharge circuit 3 is arranged to supply a main discharge current for producing the electric discharge and superimposes a main discharge current on an electric discharge inducting current after an electric discharge inducing by the discharge inducting circuit 4. The main discharge circuit 3 and discharge inducting circuit 4 are actuated based on control signals from a control circuit 5.

The main discharge circuit 3 includes a main discharge source 31 for supplying a main discharge current at the gap between the electrodes. The main discharge source 31 is connected in series to two switch elements 32 and 33 thus forming a closed circuit for the main discharge current. In the main discharge circuit, for example, a diode 34 is connected towards a ground terminal of the workpiece 2 from one electrode terminal of the main discharge source 31 and a diode 35 is connected towards another electrode terminal of the main discharge source 31 from the tool electrode 1, thus forming a cross connection source. The switching of the switch elements 32 and 33 is controlled by control signals s3 of the control circuit 5.

The discharge inducting circuit 4 includes a discharge inducting source 41 for applying a discharge inducting voltage at the gap between the electrodes, thus forming a closed circuit for supplying the electric discharge inducting voltage by a diode 42 and a current limiting resistor 43 which are connected in series. Also, in the discharge inducting circuit 4 four switching elements 44, 45, 46, and 47 compose a circuit for switching a supply of a electric discharge voltage to the tool electrode 1. The composition of switch elements 44, 45, 46, and 47 of embodiment 1 is arranged by connecting the switch element 44 between one electrode of the discharge inducting source 41 and the tool electrode 1, the switch element 45 between the other electrode of the discharge inducting source 41 and the workpiece electrode 2, the switch element 46 between the one end of the discharge inducting source 41 and a ground of the workpiece 2, and the switch element 47 between the other electrode of the discharge inducting source 41 and the tool electrode 1.

The two switch elements 44 and 45 receive a common control signal for a simultaneous switching control. Also, the two switch elements 46 and 47 receive another common control signal to said common control signal for the two switch elements 44 and 45 for a simultaneous switching control.

It is assumed in this embodiment that the polarity of the discharge inducting voltage applied to the tool electrode 1 is positive when it is identical to that of the main discharge current supplied from the main discharge source to the workpiece and negative when not.

The control circuit 5 detects an electric discharge detecting introducing a voltage to the tool electrode 1 and outputs a control signal s3 based on the electric discharge detecting signal to the main discharge circuit 3 and a control signal s4 to the discharge inducting circuit 4.

More particularly, the switching circuit 6 is a circuit that receives the control signal s4 from said control circuit 5 and controls a make and break of the switch elements of the discharge inducting circuit 4. The switching circuit 6 of embodiment 1 comprises a flip-flop 63 receiving the control signal s4 from the inverter 64 through a trigger terminal, an AND gate 61 for producing an AND signal from a Q output of the flip-flop 63 and the control signal s4 and delivering said AND signal to the switch elements 44 and 45, and an AND gate 62 for producing an AND signal from an inversion of the Q output (referred to as a Q* output hereinafter) of the flip-flop 63 and the control signal s4 and delivering said AND signal to the switch elements 46 and 47. The Q* output of the flip-flop 63 is also connected to a D terminal of the same.

As shown in Fig. 1, the main discharge circuit 3, discharge inducting circuit 4, and switching circuit 6 are defined by the broken lines.

### (Operation of Embodiment 1)

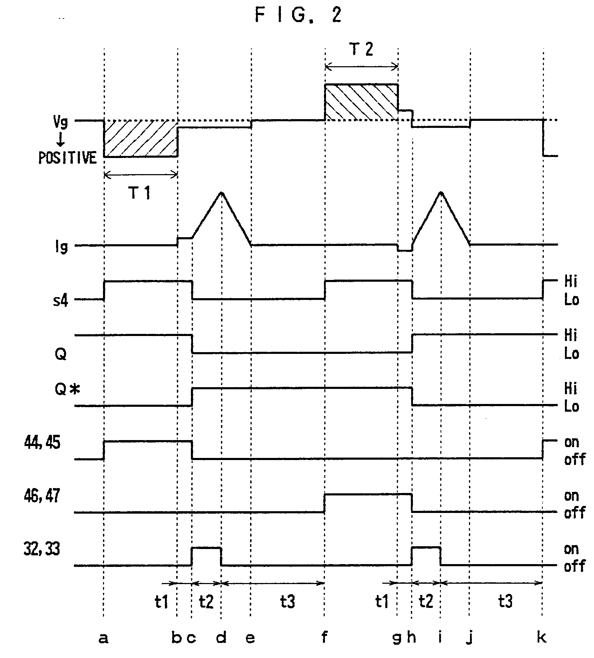

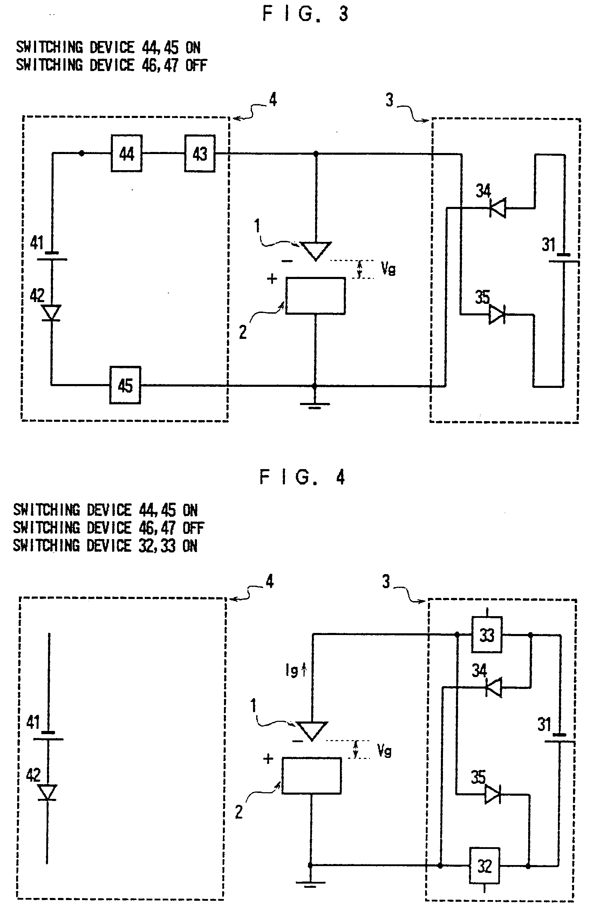

The operation of the arrangement of embodiment 1 will now be explained referring to a time chart of Fig. 2 and circuitry diagrams of Figs 3, 4 and 5. The points of time denoted by a to k in the time chart of Fig. 2 are used for a following explanation.

As shown in Fig. 2, a positive discharge inducting voltage (which is identical in the polarity to the main discharge source supplying the main discharge current to the workpiece) is applied during a period from time a to time f, and a negative discharge inducting voltage (which is opposite in the polarity to the main discharge source supplying the main discharge current to the workpiece) is applied during a period from time f to time k.

Time a; the control circuit 5 supplies the control signal s4 of a high state to the switching circuit 6. The flip-flop 63 receives this control signal s4 through the inverter 64 and delivers a Q signal (high) to one of the two input terminals of the AND circuit 61. The other input terminal of the AND circuit 61 receives the control signal s4 (high) and produces a logical sum of the high Q signal and the high control signal s4 thus outputs said logical sum signal to the switch elements 44 and 45.

The switch elements 44 and 45 of the discharge inducting circuit 4 are turned on by the logical sum signal, impress a positive discharge inducting voltage to the tool electrode 1. It is noted that a potential Vg at the gap shown in the time chart of Fig. 2 is positive in the trailing and negative in the leading.

At the point a, the Q* output of the flop-flop 63 is low so that the AND circuit 62 produces a low signal. The switch elements 46 and 47 of the discharge inducting circuit 4 thus remain OFF state. Fig. 3 illustrates a state of the circuit connection state of the power supply of the electric discharge apparatus with the switch elements 44, and 45 being ON state, the switch elements 46 and 47 being OFF state, and the switch elements 32 and 33 are OFF state. The positive terminal of the discharge inducting source 41 is connected to the workpiece 2 which is impressed a positive voltage. The negative terminal of the discharge inducting source 41 is connected to the tool electrode 1 which is impressed a negative voltage. In this manner, the positive discharge inducting voltage is applied to the gap between electrodes.

As the result, with the positive inducting voltage being applied to the tool electrode, the positive voltage Vg remains impressing there until a dielectric being broken down then starting an electric discharge. The duration from the apply of the discharge inducting voltage to the tool electrode to the start of an electric discharge is denoted by T1 in the time chart.

Time b; when the electric discharge starts, the gap voltage Vg is decreased (in the time chart of Fig. 2, the decrease of the gap voltage Vg is expressed as a rising). The decrease of the gap voltage Vg is then detected by the control circuit 5.

Time c; the control circuit 5 upon detecting the electric discharge makes the control signal s3 a high state then turns on the switch elements 32 and 33 of the main discharge circuit 3. Accordingly, the main discharge source 31 is connected to the tool electrode 1 and the workpiece electrode 2 so that a main discharge current Ig flows in the direction denoted by the arrow. Simultaneously, the control circuit 5 supplies a control signal s4 being low state to turn the logical sum signal of the AND circuit 61 to low and thus induces the switch elements 44 and 45 to a ON state.

The control signal s4 of the control circuit 5 is also inverted by the inverter 64 and transmitted to the trigger input terminal of the flip-flop 63. In response to the trailing edge of the control signal s4, the flip-flop 63 turns its Q and Q* signals to a low state and a high state respectively. The logical sum signal of the AND circuit 62 is low, because of the low s4 signal and the high Q* signal. Therefore, the switch elements 46 and 47 remain OFF state.

As the result, the four switch elements 44, 45, 46, and 47 OFF are state so that impression of the discharge inducting voltage to the gap ceases. Fig. 4 shows the circuit connection state of the power supply of the electric discharge apparatus with the switch elements 44, 45, 46, and 47 being OFF state and the switch elements 32 and 33 being ON state. While the discharge inducting source 41 is not connected to the tool electrode 1 and the workpiece 2, the main discharge source 31 is connected at its positive terminal to the workpiece 2 and at its negative terminal to the tool electrode 1 so that its main discharge voltage is applied to the gap of the electrodes so that the main discharge current Ig flows.

There is a delay of time from the detection of the decrease of the gap voltage Vg to an ON state of the switch elements 32 and 33. So, there is a delay t1 from the start of electric discharge to a OFF state of the switch elements 32 and 33. A length of the delay is as small as some hundreds nanoseconds.

For continuing the electric discharge during the delay, the switch elements 44 and 45 are maintained in ON state until the switch elements 32 and 33 are turned to ON state.

It is possible for ease of the flow of the main discharge current caused by electric discharge that the ON state duration of the switch elements 44 and 45 is overlapped with that of the switch elements 32 and 33.

Time d,e; the control circuit 5 turns the control signal s3 to low state after a predetermined time of t2 so that turns the switch elements 32 and 33 of the discharge circuit 3 to OFF state. Upon the switch elements 32 and 33 being on OFF state, the voltage impressing of the main discharge source 31 to the tool electrode 1 and the workpiece 2 is terminated. However, electromagnetic energy stored in inductance components of the main discharge circuit is released through the diodes 34 and 35 thus making the main discharge current Ig to continue to flow after the OFF state of the switch elements 32 and 33.

Time f; the control circuit 5 turns the control signal s3 to a low state for turning the switch elements 32 and 33 of the main discharge circuit 3 to a OFF state and after a determined idle period of t3, turns the control signal s4 to a high state. During the idle period of t3, neither the discharge inducting voltage nor the main discharge voltage is applied to the gap of the electrodes so that the gap is returned to insulation state.

By the process from the time to the time f, a cycle of the electric discharge machining is executed with the apply to the gap between the electrodes of the positive discharge inducting voltage (which is identical in the polarity to the main discharge current supplied from the main discharge source to the workpiece).

This cycle is followed by another electric discharge machining with the apply of a negative discharge inducting voltage to the gap between the electrodes which is triggered by the control signal s4. When the control signal s4 is turned to high state as, the Q* signal is high state, the AND gate 62 delivers a logical sum of the control signal s4 and the output Q* signal to the switch elements 46 and 47 of the discharge inducting circuit 4. Upon receiving the sum signal, the switch elements 46 and 47 turn to an ON state so that supplies the discharge inducting voltage of the opposite polarity to the gap between the electrodes.

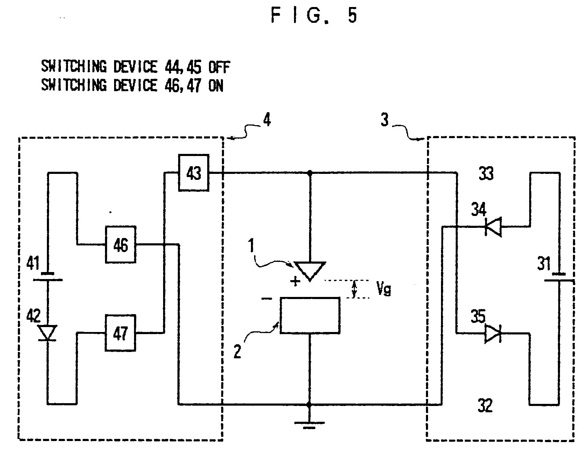

Fig. 5 illustrates the circuit connection state of the power supply of the electric discharge apparatus with the switch elements 44 and 45 being OFF state, the switch elements 46 and 47 being ON state, and the switch elements 32 and 33 being OFF state. The discharge inducting source 41 is connected at its negative electrode to the workpiece 2 and at its positive electrode to the tool electrode 1, the discharge inducting voltage which is opposite in the polarity to the discharge inducting voltage applied during the time a and the case shown in Fig. 3.

When the discharge inducting voltage the polarity of which is opposite, is supplied to the tool electrode 1, the gap voltage Vg, the polarity of which is opposite, may be continued to be supplied to the gap, until the insulation of the gap being broken down then starting the electric discharge. The period in which from the time the electric discharge voltage is supplied to the tool electrode 1 to the time the electric discharge starts, is shown in the time chart of Fig. 2 as denoted by a period T2.

Time g; when the insulation is broken down and the electric discharge starts, the absolute value of the gap voltage Vg is declined (as shown in the form of a fall in Fig. 2). The main discharge current Ig flows by the electric discharge at the gap. The direction of the current Ig is reverse direction to the direction at the time b. The control circuit 5 detects the electric discharge by a change of the gap voltage Vg.

Time h; the control circuit 5 upon detecting the electric discharge turns the control signal s3 to a high state and turns the switch elements 32 and 33 of the main discharge circuit 3 to ON state. The main discharge source 31 is then connected to the gap between the tool electrode 1 and the workpiece 2 makes the main discharge current Ig flow in the direction opposite to the reverse direction at the time g. The main discharge current Ig flows in the direction denoted by the arrow of Fig. 4. Also, the control circuit 5 shifts the control signal s4 to a low state thus making the logical sum output of the AND circuit 62 to produce a low state so that makes the switch elements 46 and 47 to an OFF state.

The control signal s4 of the control circuit 5 is transmitted to the inverter 64 where it is inverted and supplied to the trigger input terminal of the flip-flop 63. The flip-flop 63 responds to the decay of the control signal s4 inverted by the inverter 64 and makes a Q signal high state and a low Q* signal low state. The AND gate 61 produces a low logical sum signal from the high Q signal and the low state of the control signal s4. The logical sum signal maintains the switch elements 44 and 45 in an OFF state.

As the result, the four switch elements 44, 45, 46, and 47 all are an OFF state making the impression of the electric discharge voltage to the gap cease. This circuit situation is identical to that shown in Fig. 4 where the main discharge voltage is applied to the gap between the electrodes making the main discharge current Ig to flow.

There is also a delay t1 from the start of electric discharge to the ON state of the switch elements 32 and 33, as there is a delay from the time when the decrease of the absolute of gap voltage Vg to the time when the switch elements 32, 33 are ON state, as shown before.

For continuing the electric discharge during the delay, the switch elements 46 and 47 are maintained in an ON state until the switch elements 32 and 33 of the main discharge circuit 3 are turned to an ON state.

It is possible to control the periods of ON state of the switch elements 46, 47 and that of the switch elements 32, 33 to be overlapped each other so that the main discharge current may flow reliably by electric discharge.

Time i, j; the control circuit 5 turns the control signal s3 to a low state after a predetermined time of t2 for turning the switch elements 32 and 33 to an OFF state. Upon the switch elements 32 and 33 being turned to an OFF state, the voltage supply of the main discharge source 31 to the tool electrode 1 and the workpiece 2 is ceased. However, electromagnetic energy stored in the inductance components of the main discharge circuit is released through the two diodes 34 and 35 thus the main discharge current Ig being continued to flow after the turning to an OFF state of the switch elements 32 and 33.

Time k; the control circuit 5 turns the control signal s3 to a low state for turning the switch elements 32 and 33 of the main discharge circuit 3 and to an OFF state after a predetermined idle period of t3 changes the control signal s4 to a high state. During the idle period of t3, neither the discharge inducting voltage nor the main discharge voltage is applied to the gap of the electrodes so that the gap is returned to insulation state.

By the process from the to the time k, a cycle of the electric discharge machining is executed with the apply to the gap between the electrodes of the negative discharge inducting voltage (which is opposite in the polarity to the main discharge current supplied from the main discharge source to the workpiece).

The operation of electric discharge machining of the workpiece is carried out by repeating the electric discharge process from time a to time f associated with the positive discharge inducting voltage and the succeeding electric discharge process from time f to time k associated with the negative discharge inducting voltage.

It is now made comparison between the period of applying the discharge voltage shown as a duration T1 which is the electric discharge process executed by the positive electric discharge voltage from time a to time f and the period of applying the discharge voltage shown as a duration T2 which is the electric discharge process executed by the negative electric discharge voltage from time f to time k. A period from the apply of the discharge inducting voltage to the start of the electric discharge depends on the conditions of the gap between the two electrodes. Hence, there may be a difference between T1 and T2 in each electric discharge. However, the positive and negative discharge inducting voltages are different in the polarity but identical in the absolute value to each other and may thus be equal in easiness of executing the discharge inducting. In a long period of time, it can be said that T1 and T2 are almost equal in average length. This allows the mean voltage of the gap between the electrodes to be substantially 0 V. Accordingly, the electrolytic effect caused by the apply of the discharge inducting voltage in the process of electric discharge will be prevented.

It is possible that the shift of the polarity of the discharge inducting voltage to the gap between electroads in the electric discharge machining apparatus shown in the embodiment 1 can be shifted alternately at equal intervals of time in each electric discharge.

### [Embodiment 2 of the present invention operation]

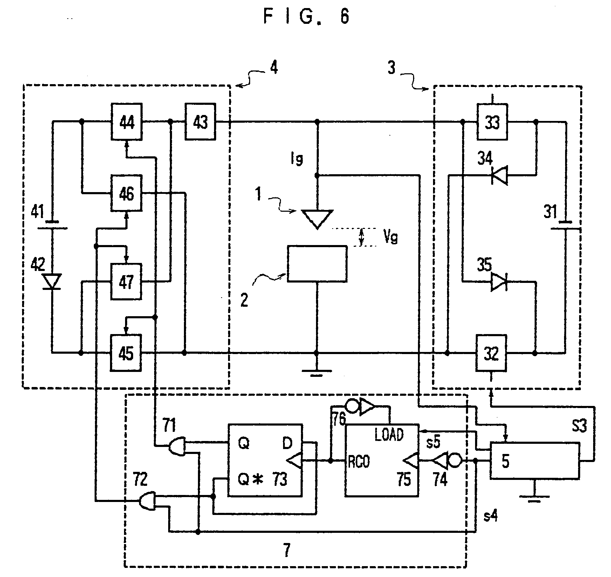

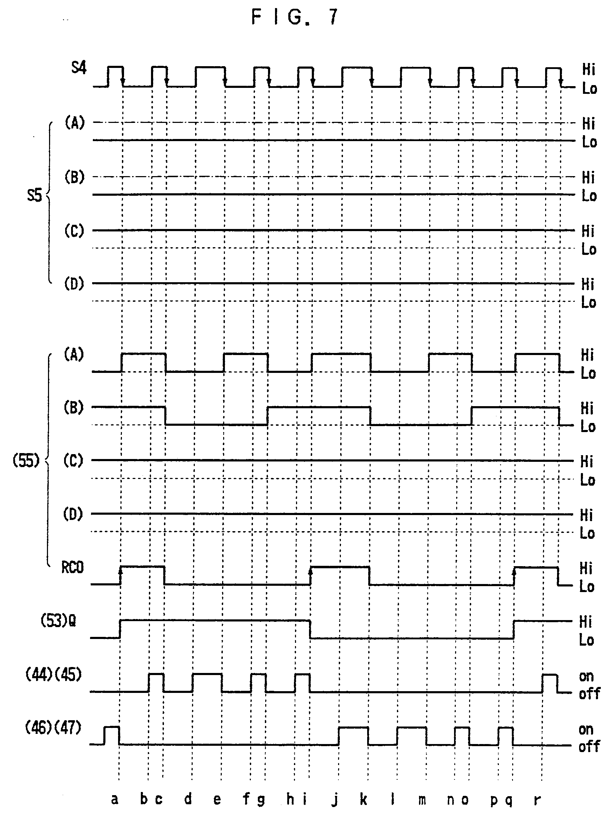

The construction and operation of Embodiment 2 of the present invention will now be described referring to Figs. 6 and 7.

### (Construction of Embodiment 2)

Fig. 6 is a schematic view showing a power supply of the electric discharge machining apparatus for explaining embodiment 2 of electric discharge of the present invention. The construction of the embodiment 2 of the present invention shown in Fig. 6 is similar to that of embodiment 1 of the present invention shown in Fig. 1 and comprises a tool electrode 1, a workpiece 2, a main discharge circuit 3, an electric discharge inducting circuit 4, a control circuit 5, and a switching circuit 7. The difference between embodiment 1 and embodiment 2 in construction is the construction of a control circuit and a switching circuit. Hence, the constructions of the control circuit 5 and the switching circuit 7 only will be explained in more details but the explanation will be omitted in the tool electrode 1, workpiece 2, main discharge circuit 3, and discharge inducting circuit 4.

The control circuit 5 of the present embodiment delivers to the switching circuit 7 a control signal s4 which is identical to that of embodiment 1 and also delivers command signal s5. The command signal s5 is a command signal for determining a number used for presetting a counter in the switching circuit 7.

The switching circuit 7 of embodiment 2 of the present invention is responsive to the control signal s4 of the control circuit 5 for controlling a make and break of switch elements in the discharge inducting circuit 4 as similar as embodiment 1. More particularly, the switching circuit 7 comprises a counter 75 responsive to the control signal s4 supplied to its clock input terminal via an inverter 74 from the control circuit 5 for presetting by the command signal s5 from the control circuit 5 and outputting an RCO signal, a flip-flop 73 receiving the RCO signal in a trigger input terminal, an AND gate 71 for producing an AND signal from a Q output of the flig-flop 73 and the control signal s4 and delivering it to switch elements 44 and 45, and another AND gate 72 for producing an AND signal from an inversion of the Q output (referred to as a Q* output hereinafter) of the flig-flop 73 and the control signal s4 and delivering it to switch elements 46 and 47. The Q* output of the flip-flop 73 is also connected to a D terminal of the same. Two, ROC and LOAD, terminals of the counter 75 are connected by an inverter 76 to each other.

As shown in Fig. 6, the main discharge circuit 3, discharge inducting circuit 4, and switching circuit 7 are defined by the broken lines.

### (Operation of Embodiment 2 of the present invention)

The operation of embodiment 2 of the present invention will be explained referring to a time chart of Fig. 7. The points of time denoted by a to k in the time chart of Fig. 7 are used for a following explanation.

As shown in the time chart of Fig. 7, a positive discharge inducting voltage (which is identical in the polarity to a main discharge source supplying the main discharge current to the workpiece) is applied during a period from time b to time j and a negative discharge inducting voltage (which is opposite in the polarity to the main discharge source supplying the main discharge current to the workpiece) is applied during a period from time j to time r.

This embodiment is carried out by executing a continual series of electric discharge machining initiated with the electric discharge by the apply of a same polar discharge inducting voltage of a positive or negative polarity, then alternates said electric discharge machining with alternate polarities. Following embodiment shows an example wherein supplying a positive or a negative electric discharge voltage is executed alternately each four times.

The counter 75 of embodiment 2 is composed of a hexadecimal counter which counts up each 4 counts and produces an RCO signal from ROC terminal for presetting so that the positive and negative discharge inducting voltages are alternately applied of four in each time, as shown in the time chart of Fig. 7.

For determining the counting number of the counter 75, the command signal s5 of the control signal 5 is preferably a 4-bit signal such as A to D. As shown in Fig. 7, the command signal s5 of the control signal 5 being low as A bit, low as B bit, high as C bit, and high as D bit causes the counter 75 to count up each 4 counts. The command signal s5 may allow the counter 75 to count up to a different number when being sent a each different 4 bits signal A to D of command signal s5.

The case of four alternate applications of the positive and four negative discharge inducting voltage will be explained. The four 4-bit signals A to D denoted by (55) in Fig. 7 are shown as a counting action of the counter 55 which counts up every 4 counts out of hexadecimal number and thus, the two signals A and B only are involved while the C and D signals remain unchanged.

Time a; it is assumed that before the point of time a, the switch elements 46 and 47 are in an ON state to include an electric discharge with a negative discharge inducting voltage. The counter 75 shows 14 with the two signals A and B being 0 and 1 respectively.

Then, the control signal s4 falling at the time a is inverted by the inverter 74 and applied to the clock input terminal of the counter 75. The counter 75 counts up to increase the counting number of the counter 75 to 15 with the signals A and B being 1. Upon counting up, the counter 75 delivers the RCO signal and where it is inverted and supplies back said signal inverted by the inverter 76 to the LOAD input of the counter 75. Simultaneously, the flip-flop 73 detects a rise of RCO signal and inverts an output Q.

Time b; as the switch elements 46 and 47 have been in an OFF state, the main discharge voltage is applied as described with embodiment 1 (See the time a in Fig. 2) after a cause of the electric discharge voltage. The signal of this operation is not shown in the time chart of Fig. 7.

By now, the counter 75 indicates 15 which is determined at the time b. The fall of the control signal s4 of the control circuit 5 is executed a logical sum by the AND gate 71 with the Q signal thus turns on the switch elements 44 and 45. By this operation the discharge inducting circuit 4 executes a supply of the first positive discharge inducting voltage. This state is similar to at the time a of embodiment 1 in the time chart of Fig. 2.

Time c; when the control signal s4 is fallen, the counter 75 is preset to 12 with both the signals A and B being 0 by the command signal s5 of the control circuit 5. The counting number of 12 indicates that the supply of the positive discharge inducting voltage is carried out one time. The control signal s4 being in a low state causes the AND gate 71 to deliver a logical sum signal thus turns the switch elements 44 and 45 to an OFF state.

In a duration from time c to time d when the next control signal s4 rises, the start of an electric discharge, an electric discharge machining and a recovery of insulation are performed as prescribed in embodiment 1 with the time points d and e in Fig. 2. Those signals of operation of embodiment 2 are not shown in the time chart of Fig. 7.

Time d; when the control signal s4 rises, the AND gate 71 turns its output high and the switch elements 44 and 45 to be in an ON state. Accordingly, the discharge inducting circuit 4 employs a second positive discharge inducting voltage.

Time e; when the control signal s4 falls, the AND gate 71 delivers a low output for turning the switch elements 44 and 45 to be in an OFF state. This causes the discharge inducting circuit 4 to cease the second supply of the positive discharge inducting voltage. The counter 75 responds to the fall of the control signal s4 and turns the count number to 13 with the A and B signals being 1 and 0 respectively. The count number of 13 represents that the supply of the positive discharge inducting voltage is carried out two times. In a duration from time e to time d when the rise of the succeeding control signal s4, a start of electric discharge, an electric discharge machining, and recovery of insulation are performed as shown at the time points d and e in Fig. 2 of said embodiment 1. Signals of those operation of embodiment 2 are not shown in the time chart of Fig. 7.

Time f; when the control signal s4 rises, the AND gate 71 delivers a high output for turning again the switch elements 44 and 45 to be in an ON state. The discharge inducting circuit 4 executes a supply of a third positive discharge inducting voltage.

Time g; when the control signal s4 falls, the similar operation at time e is executed so that the discharge inducting circuit 4 ceases the supply of the third positive discharge inducting voltage. The counter 75 turns the A and B signals to 0 and 1 respectively and turns the count number to 14. The count number of 14 now represents that the supply of the positive discharge inducting voltage is carried out three times. In a duration from time g to time h when the successive control signal s4 rises, a state of an electric discharge, an electric discharge machining and a recovery of insulation are executed as shown at the time points d and e in Fig. 2. Signals of those operations of embodiment 2 are not shown in the time chart of Fig. 7.

Time h; when the control signal s4 rises, the AND gate 71 produces a high output for turning again the switch elements 44 and 45 to be in a ON state. The discharge inducting circuit 4 executes a supply of a forth positive discharge inducting voltage.

Time i; when the control signal s4 falls the similar operation at time e or time g is executed so that the discharge inducting circuit 4 ceases the supply of the fourth positive discharge inducting voltage. The counter 75 turned both the A and B signals: to 1 and turns the count number to 15. The count number of 15 now indicates that the supply of the positive discharge inducting voltage is carried out fourth times. The counter 75 upon counting up delivers the RCO signal which in turn is inverted by the inverter 76 and returned back to the LOAD input terminal of the counter 75. The flip-flop 73 detects a rise of the RCO signal, and turns the output Q. As the output Q signal is inverted, the switch elements 44 and 45 is replaced with the switch elements 46 and 47 for a successive operation of the discharge inducting circuit.

In a duration from time i to time j when the successive control signal s4 rises, a start of an electric discharge, an electric discharge machining and a recovery of insulation are executed as shown at the time points time d and time e in Fig. 2. Signals of those operations of embodiment 2 are not shown in the time chart of Fig. 7.

In a duration from time b to time j, the electric discharge machining is executed by the apply of the positive discharge inducting voltage. In a following duration from time j to time r, the electric discharge machining is executed by the apply of the negative discharge inducting voltage. The operation during the period from time j to time r distinguished by only the construction that the switch elements 44 and 45 are substituted with the switch elements 56 and 57 during the period from time b to time j others will be explained in no more detail.

Therefore, the operation carried out during the period from time b to time r, executes the discharge inducting actions in the same number of times with positive and negative discharge inducting voltages.

It is now compared between the apply of the positive discharge inducting voltage from time b to time j and the apply of the negative discharge inducting voltage from time j to time r. The two inducting voltages are identical to each other in the magnitude and the number of apply times but different in the polarity. Accordingly, even when there is variation in the length of duration for applying each electric discharge inducting voltages, the mean voltage of the electric discharge inducting voltage can be treated as 0 V due to more than one time of the electric discharge. As the result, electrolytic effects caused by the apply of the discharge inducting voltage will be avoided.

According to embodiment 2, the number of successive apply times of the discharge inducting voltage of one polarity can be varied as adjusted by varying the count number of the counter 75 for preset.

### [Embodiment 3 of the present invention]

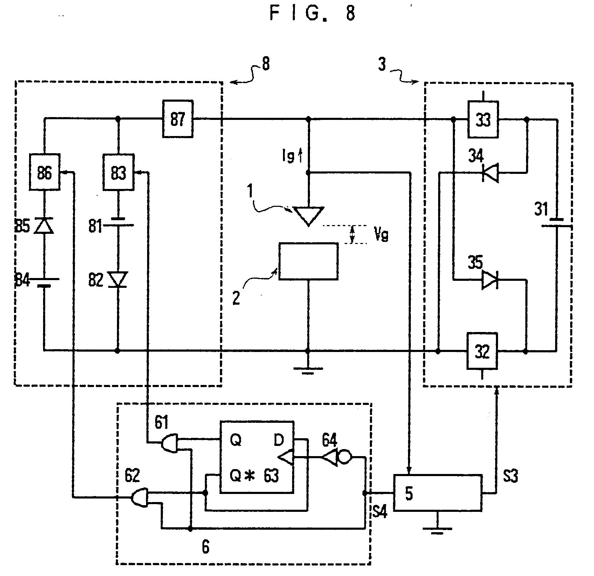

The construction and operation of embodiment 3 of the present invention will be described referring to Fig 8.

### (Construction of embodiment 3)

Fig. 8 is a schematic view showing a power supply of the electric discharge machining apparatus for explaining embodiment 3 of electric discharge of the present invention. The construction of embodiment 3 of the present invention is similar to that of embodiment 1 or 2 shown in Fig. 1 or 6 respectively, which includes a tool electrode 1, a workpiece 2, a main discharge circuit 3, a discharge inducting circuit 8, a control circuit 5, and a switching circuit 6. This embodiment is differentiated from embodiment 1 or 2 by the arrangement of the discharge inducting circuit 8. The discharge inducting circuit 8 will thus be explained in more details but not the tool electrode 1, workpiece 2, main discharge circuit 3, and switching circuit 6.

The switching circuit 6 shown in Fig. 8 shows an example of it in embodiment 1, and also uses the switching circuit of embodiment 2 shown in Fig. 6.

The discharge inducting circuit 8 of embodiment 3 of the present invention includes two power sources, one of which is a power source for a positive voltage and the other of which is a power source for a negative voltage, and the polarity of discharge inducting voltage to the gap is changed by a switching of those power sources with switching element. As shown in Fig. 8, a serial circuit of the positive discharge inducting voltage source, a diode 82 and a switch element 83 and serial circuit of the negative discharge inducting voltage source 84, and a switch element 86 are connected in parallel. The two are further connected by a current limiter resistor 87 to the tool electrode 1 and the workpiece 2. The two discharge inducting voltage sources 81 and 84 are opposite to each other in the polarity for the tool electrode 1 or workpiece 2.

The connection of each discharge inducting voltage source to the gap is executed by its switch element which is controlled by a signal from the switching circuit 6.

### (Operation of Embodiment 3 of the present invention)

The operation of embodiment 3 of the present invention will now be explained. The operation of embodiment 3 of the present invention is nearly similar to that of embodiment 1 or 2 but differentiated by only the operation. The shift of the power supply in the discharge inducting circuit 8 will be explained in more detail.

Each positive and negative voltage source of the discharge inducting circuit 8 is connected to the gap by the operation of their respective switch elements 63 and 66. The two switch elements 63 and 66 are controlled by output signals of two AND gates 61 and 62 of the switching circuit 6 respectively for connecting only one of them as described in the previous embodiment 1 or 2.

According to embodiment 3, the number of switch elements can be reduced and it is not necessary to consider the timing of actions of the switch elements.

## Claims

1. An electric discharge method of producing a series of discharges between a tool electrode and a workpiece, comprising applying a discharge inducting voltage to a gap between the tool electrode and the workpiece to induct an electric discharge by the discharge inducting voltage, thus breaking down the insulation of the gap, and immediately thereafter superimposing a main discharge current; and, for the production of a subsequent discharge, reversing the polarity of the discharge inducting voltage applied to the gap, such that in the series of discharges the polarity of the discharge inducting voltage is repeatedly reversed at a minimum period of a single electric discharge.

2. An electric discharge method according to claim 1, wherein the reversal of the polarity of the discharge inducting voltage is carried out periodically.

3. An electric discharge method according to claim 2, wherein the periodical reversal of the polarity of the discharge inducting voltage is carried out alternately at each electric discharge.

4. An electic discharge method according to claim 2, wherein the periodical reversal of the polarity of the discharge inducting voltage is carried out at each predetermined period of time including several electric discharges.

5. An electric discharge method according to claim 4, wherein the numbers of applications of the discharge inducting voltage at the same polarity are equal during the respective said predetermined periods of time.

6. An electric discharge method according to claim 4 or 5, wherein the polarity reversals carried out at said predetermined periods of time are executed alternately and periodically.

7. An electric discharge machining apparatus for machining a workpiece by producing a series of intermittent electric discharges at a gap between a tool electrode and the workpiece, comprising:
a discharge inducting circuit having at least one DC power source for inducting an electric discharge at the gap between the electrodes;
a main discharge circuit for superimposing a main discharge current for machining after said electric discharge; and
a switching circuit for selectively changing the polarity of a discharge inducting voltage of the discharge conducting circuit applied to the gap.

8. An electric discharge machining apparatus according to claim 7, wherein the switching circuit includes four switch means connected between the DC source and the gap for changing the polarity of the discharge inducting voltage applied to the gap by the make and break of said switch means.

9. An electric discharge apparatus according to claim 7 or 8, wherein the switching circuit arranges the period of the change of each electric discharge as a minimum unit period.

10. An electric discharge method of applying a discharge inducting voltage to a gap between a tool electrode and a workpiece inducting an electric discharge by the discharge inducting voltage, thus breaking down an insulation of the gap, immediately after that superimposing a main discharge current, characterised by shifting the polarity of the discharge inducting voltage to the gap in each electric discharge as a minimum unit period.
